# NEUE EUROPÄISCHE PATENTSCHRIFT

(11) **EP 3 620 704 B2**
(45) Veröffentlichungstag und Bekanntmachung des Hinweises auf die Entscheidung über den Einspruch: **08.04.2026**
(45) Hinweis auf die Patenterteilung: 16.08.2023
(21) Anmeldenummer: 19195278.7
(22) Anmeldetag: 04.09.2019
(51) Int. Cl.: F16L 27/08, F16L 27/11, F16L 47/02, F16L 47/18, F16L 47/28, F16L 47/30

(54) **VERFAHREN ZUM HERSTELLEN EINES INSBESONDERE FLEXIBLEN VERTEILERROHRES**
METHOD FOR PRODUCING AN ESPECIALLY FLEXIBLE DISTRIBUTION PIPE
PROCÉDÉ DE FABRICATION D'UN TUBE DE DISTRIBUTION, EN PARTICULIER FLEXIBLE

(30) Priorität: 04.09.2018 DE 102018121562
(43) Veröffentlichungstag der Anmeldung: 11.03.2020
(73) Patentinhaber: Voss Automotive GmbH, 51688 Wipperfürth (DE)
(72) Erfinder: GRAMCKOW, Erik, 53757 St. Augustin (DE); KOLBERG, Ralf, 50733 Köln (DE); HEIENBROK, Mark, 51766 Engelskirchen (DE)
(74) Vertreter: Dr. Solf & Zapf Patent- und Rechtsanwalts PartG mbB

(56) Entgegenhaltungen:
- EP-A1- 1 520 926
- EP-A2- 0 833 094
- EP-A2- 2 295 655
- EP-B1- 0 563 575
- WO-A1-89/04755
- DE-A1- 2 824 395
- DE-A1- 3 334 413
- DE-U1- 20 001 464
- DE-U1- 202010 001 821
- DE-U1- 202013 005 740
- US-B1- 7 714 035
- ANONYMOUS: "Wellrohr", WIKIPEDIA, 24 May 2018 (2018-05-24), XP093190237, Retrieved from the Internet <URL:https://de.wikipedia.org/w/index.php?title=Wellrohr&oldid=177708727>

## Beschreibung

Die vorliegende Erfindung betrifft ein Verfahren zum Herstellen eines Verteilerrohres gemäß dem Oberbegriff des Anspruchs 1.

Aus der DE 28 24 395 A1 ist ein Rohr aus Polyvinylidenfluorid bekannt. Das Rohr weist Glatt- und Wellrohrabschnitte auf, wobei der Glattrohrabschnitt eine Abzweigung für ein Verbinderteil aufweist, welche mittels eines eingesetzten T-förmigen Zwischenstück ausgebildet ist.

Die DE 33 34 413 A1 offenbart eine einstückig aus Metall ausgebildete Auspuffsammelleitung für mehrzylindrische Kraftfahrzeugmotoren. Diese Auspuffsammelleitung weist axial beabstandet angeordnete Wellen, welche insbesondere einen radialen Dehnungsausgleich bereitstellen, auf.

Ein Rohr mit einer Kompensationseinrichtung ist weiterhin aus der DE 200 01 464 U1 bekannt. Dabei weist das Rohr sowohl Wellrohr- als auch Glattrohrabschnitte auf. Zusätzlich sind in den Glattrohrabschnitten Rohrwandungsstrukturen zum Einführen von elektrischen Kabeln vorhanden.

Aus der EP 0 833 094 A2 ist ein Aufschweißsattel bekannt, wobei der Aufschweißsattel mit einem Hauptrohr und einem Abzweigrohr jeweils verschweißt ist. Der Aufschweißsattel wird dafür in eine in die Rohrwandung des Hauptrohrs eingelassene Bohrung eingesetzt und mit der Wandung verschweißt.

Die US 7,714,035 B1 offenbart einen monolithischen Fluidverteiler für Sanitäreinrichtungen mit einer glatten Rohrwandung. Dieser Fluidverteiler ist für eine hohe Formstabilität, hohe Verformungsbeständigkeit und eine glatte innere und äußere Rohrwand ausgebildet.

Eine weiteres Fluidsystem ist aus der DE 20 2010 001821 U1 bekannt. Es wird eine Spritzdüsenanordnung für Scheibenreinigungsanlagen von Kraftfahrzeugen vorgeschlagen, welche Verteilerschnittstellen zum Einsetzen eines Düsenkörpers aufweist.

Die DE 198 11 019 A1 beschreibt eine insbesondere beheizbare Flüssigkeitsleitung, die vorzugsweise dazu dient, Spritzwasser zu führen, das zur Reinigung von Kraftfahrzeugscheiben oder -scheinwerfern dient. Die bekannte Leitung weist ein Flüssigkeitsrohr auf, das zumindest abschnittsweise als Wellrohr ausgebildet und dadurch flexibel ist. Es sind daran jedoch keine Verteilerschnittstellen zum Anschluss von Nebenleitungssträngen vorgesehen. Das Flüssigkeitsrohr weist bevorzugt zumindest an einem Ende ein Kupplungsstück auf, und zwar insbesondere an dem Ende, durch das die Flüssigkeit abgegeben wird. Vorzugsweise wird das Kupplungsstück einstückig mit dem Wellrohr ausgebildet. Dadurch kann ein Aneinanderfügen von Flüssigkeitsrohr und Kupplungsstück vermieden werden und eine flüssigkeitsdichte Verbindung ist automatisch gewährleistet. Bevorzugt wird das Kupplungsstück dabei zusammen mit dem Wellrohr in einem Corrugator erzeugt. Da sich in einem Kraftfahrzeug Spritzwasserleitungen über mehrere Meter hinziehen können, müssten übergroße Corrugatoren gebaut werden, um ein durchgängiges Wellrohr zwischen zwei endseitigen Kupplungsstücken auszubilden. Um die Herstellungskosten zu verringern, wird deshalb das Rohr vorzugsweise so gestaltet, dass sich Zwischenabschnitte, die wenigstens einem, bevorzugt zwei verbundenen Kupplungsstücken entsprechen, periodisch wiederholen. Diese Zwischenabschnitte werden dann jeweils miteinander verbunden, um den Leitungsstrang herzustellen. Mit steigender Zahl von Zwischenabschnitten wachsen allerdings Montageaufwand und Leckageanfälligkeit.

In der EP 1 568 469 A2 wird ein Verfahren beschrieben, das sich darauf bezieht, einen rohrförmigen Körper, der als Träger eines Hilfselements, wie eines Füllventils oder eines Drucksensors, dient, peripher an einer glattwandigen, starren oder halbstarren Flüssigkeitsübertragungsleitung anzubringen. Die Leitung, welche insbesondere in der Klimaanlage eines Kraftfahrzeugs eingesetzt werden kann, ist dabei mit mindestens einer äußeren Kunststoffschicht überzogen. Das Verfahren umfasst das Bereitstellen eines Kunststoff-Ansatzstücks an einem Ende des rohrförmigen Körpers, wobei das Ansatzstück in einem, in Form eines Zylinderabschnitts ausgebildeten Sockel endet. Von der Innenfläche des Sockels steht dabei ein Wulst ab. Der Sockel wird auf den Außenumfang der Leitung gesetzt und dort durch einen Vibrationsschweißprozess ohne Zusatzwerkstoff abdichtend befestigt, wobei der Wulst aufschmilzt und rund um den Innenkanal des rohrförmigen Körpers eine homogene Schweißnaht mit der äußeren Kunststoffschicht bildet. Nach der Befestigung des rohrförmigen Körpers an der Leitung wird deren Wandung in Richtung auf den Innenkanal des rohrförmigen Körpers hin durchbrochen.

Ein Verteilerrohr der eingangs genannten Art ist beispielsweise aus seiner Verwendung in der Kraftfahrzeugtechnik bekannt, hat verschiedene Einsatzbereiche und kann bekanntermaßen z. B. in einem modular aufgebauten Temperiersystem eines Energiespeichers, insbesondere in einem Kühlsystem für Fahrzeugbatterien, zur Anwendung kommen.

Batterien bzw. Akkuzellen von Elektro- und Hybridfahrzeugen müssen in einem definierten Temperaturfenster betrieben werden, um deren Haltbarkeit zu gewährleisten und eine Schädigung zu vermeiden. Bekannte Temperiersysteme weisen zu diesem Zweck durchströmbare Kühlplatten auf, insbesondere Aluminium-Kühlplatten, an denen die Akkuzellen positioniert sind. Die Größe und Anzahl der Kühlplatten richtet sich dabei nach der Geometrie und Anzahl der Akkuzellen. Um eine homogene Temperierung zu ermöglichen, werden die Kühlplatten typischerweise einzeln mit einem Temperiermedium, beispielsweise einem Gemisch aus Wasser und Glykol, durchströmt. Die Zu- und Abläufe der Kühlplatten werden in eine Sammelleitung als Vor- bzw. Rücklauf geführt. Die Sammelleitungen bilden dabei jeweils einen Hauptleitungsstrang.

Solche Kühlsysteme weisen am Hauptleitungsstrang Verteilerschnittstellen auf, insbesondere zum Anschluss an die Kühlelemente sowie an weitere Rohrabschnitte und Fluidkanäle. Dazu sind am Hauptleitungsstrang Abgänge angebracht, indem darin als Rohrabschnitte insbesondere glattwandige T-Stücke montiert werden, die zur Einbindung in den Hauptleitungsstrang beidseitig Dorne oder Schweißbereiche zur Verbindung mit weiteren Leitungselementen im Hauptleitungsstrang aufweisen. Die jeweilige Verteilerschnittstelle im Abgang kann stattdessen als Steckverbinder, Kupplung, Rastverbinder, Klemmverbinder, Bajonettverschluss oder als anderer lösbarer oder unlösbarer Verbinder ausgebildet sein. Vorzugsweise ist die Verteilerschnittstelle in einem T-Stück in einem Winkel von 90° zur Längsachse des Hauptleitungsstranges angeordnet.

Neben der Verteilung des Temperierfluids auf die einzelnen Kühlplatten muss in dem Temperiersystem ein Toleranzausgleich zwischen den Kühlplatten und zwischen den Anschlüssen an einer Kühlplatte sowie ein einfacher Ein- und Ausbau möglich sein.

Die bekannten Verteilerrohre weisen den Nachteil auf, dass ein umfangreicher Montageaufwand zu ihrer Herstellung erforderlich ist, und dass mit dem Anwachsen der Zahl der eingebauten T-Stücke, wenn diese - wie in der Regel vorgesehen - nicht unmittelbar aneinanderstoßen, sondern jeweils über dazwischen liegende Wellrohrabschnitte verbunden sind, die Zahl der Verbindungsstellen im Hauptleitungsstrang auf den doppelten Wert der Anzahl Verteilerschnittstellen steigt, wodurch sich auch das Leckagerisiko in unerwünschter Weise vergrößert. Außerdem ist die Verwendung von starren Glattrohrabschnitten bzw. der genannten Glattrohr-T-Stücke nachteiligerweise nur mit einer geringen Möglichkeit zum Toleranzausgleich verbunden.

Weitere Nachteile bestehen - wie bereits erwähnt - im hohen, kostenaufwändigen Montageaufwand, der auch durch die Notwendigkeit des Arbeitens mit vielen Einzelteilen, das Ablängen, insbesondere das Schneiden, der Rohrabschnitte und die Vielzahl der Dornstellen und/oder Schweißstellen im Hauptleitungsstrang bewirkt wird. Darüber hinaus sind bei der Montage Reinheitsanforderungen einzuhalten, was sich auf Grund der Anzahl der Einzelteile und Montageschritte ebenfalls schwierig gestaltet. Schließlich ist insbesondere bei Vorhandensein von Dornprofilen jeweils eine minimale Rohrlänge der T-Stücke erforderlich, was für die Leitung eine Einschränkung ihrer Designfreiheit bedeutet.

Der vorliegenden Erfindung liegt die Aufgabe zugrunde, ein Verfahren der gattungsgemäßen Art zu schaffen, welches bei effizienter und aufwandsärmerer Arbeitsweise die vorstehend genannten Nachteile des Standes der Technik überwindet.

Diese Aufgabe wird durch die kennzeichnenden Merkmale des Anspruchs 1 und des Anspruchs 18 gelöst. Dies wird dadurch erreicht, dass zur Herstellung von zwei oder mehr Verteilerschnittstellen an zwei oder mehr ausgewählten Stellen in einem einstückig ausgeführten Längenbereich des Hauptleitungsstranges Öffnungen in die Wandung eingebracht werden, wonach an den ausgewählten Stellen jeweils eine Montage eines als Endstück eines Seitenrohres ausgebildeten Verbinderteils erfolgt, oder nachdem an den ausgewählten Stellen jeweils eine Montage eines, als Endstück eines Seitenrohres ausgebildeten Verbinderteils erfolgt ist, wobei das Verbinderteil einen Innenkanal aufweist, der in den freien Durchflussquerschnitt des Hauptleitungsstranges mündet oder zumindest mit diesem in Verbindung steht.

Es ist vorgesehen, dass der einstückig ausgeführte Längenbereich des Hauptleitungsstranges, in den die Öffnungen in die Wandung eingebracht werden, unter Einsatz eines Corrugators hergestellt wird, wobei auf diese Weise mindestens ein Wellrohrabschnitt und ein Glattrohrabschnitt erzeugt werden. Durch eine derartige Verwendung von Wellrohr mit Glattrohrabschnitt oder - umgekehrt - Glattrohr mit Wellrohrabschnitt oder - allgemein - von einem Rohrstück mit mehreren Glattrohr- und Wellrohrabschnitten ist ein einfacher Toleranzausgleich zwischen zwei Abgängen möglich, wobei die Variierbarkeit der Lochposition eine gegenüber dem Stand der Technik höhere Flexibilität bei der Herstellung des erfindungsgemäßen Verteilerrohres gewährleistet.

Erfindungsgemäß werden mittels des Corrugators an ausgewählten Stellen in dem einstückig ausgeführten Längenbereich eine sequentielle Anbringungen von radial nach außen weisenden, vom Umfang des Rohrstückes abstehenden, bevorzugt rotationssymmetrisch ausgebildeten, Rohrwandungsstrukturen, nämlich spezifische Schweißkonturen zur stoffschlüssigen Verbindung mit einem als Endstück eines Seitenrohres ausgebildeten Verbinderteils, erzeugt, die entweder verschlossen bleiben oder an denen bei Bedarf die Öffnungen in die Wandung eingebracht werden können, um dort einen Seitenabgang abzuzweigen. Eine derartige Herstellung kann mit Vorteil als Meterware erfolgen, wobei das Öffnen der Seitenabgänge bei Bedarf durch Ab- oder Aufschneiden oder Abscheren o. ä. der Spitzen bzw. der peripheren Oberflächenbereiche der seitlich von der übrigen Rohrwandung abstehenden Strukturen vorgenommen werden kann.

Erfindungsgemäß erfolgt also das Anbringen von Abgängen an einem Rohrstück, ohne dass dieses vorher zerschnitten wird, wobei an definierten Stellen in der Leitungswandung Löcher zur Montage der Verbinderteile erzeugt werden, in die, insbesondere nachfolgend, die Verbinder zur Ausbildung der jeweiligen Abgänge der Verteilerschnittstellen eingebracht werden.

Der einstückig ausgeführte, durch Extrusion herstellbare Längenbereich des Hauptleitungsstranges und/oder das als Endstück des Seitenrohres ausgebildete Verbinderteil können dabei in kostenoptimaler Weise aus einem thermoplastischen Kunststoff, insbesondere aus einem Polypropylen- oder aus einem Polyamidwerkstoff, bestehen, wobei der Kunststoff vorzugsweise mindestens einen Füllstoff, wie verstärkende Glasfasern oder ein Textil, enthält. Insbesondere durch eine Glasfaserfüllung des Verbinderteils kann den hohen Anforderungen bei der Anbindung an eine Batteriekühlplatte - vorzugsweise die Stabilität, die Toleranzen und die Kriechbeständigkeit betreffend - Rechnung getragen werden.

Unter "einstückig" wird dabei anmeldungsgemäß verstanden, dass in dem einstückigen Längenbereich des Hauptleitungsstranges keine axialen Fügestellen, wie durch Kraftschluss, Formschluss und/oder Stoffschluss, vorliegen. Nicht ausgeschlossen ist dabei aber erfindungsgemäß eine doppel- oder mehrwandige, z.B. durch Koextrusion gebildete Wandstruktur oder eine äußere Wandbeschichtung. So kann beispielsweise - im Hinblick auf ein späteres Verkleben des Spritzgussteils oder des erfindungsgemäßen Endstücks des Seitenrohres mit dem einstückigen Längenbereich des Hauptleitungsstranges vorgesehen sein, ein Mehrlagenrohr einzusetzen, wobei in der Rohrinnenschicht ein niedrigpreisiger Polypropylenwerkstoff und in der Außenschicht ein Polyamidwerkstoff mit vergleichsweise besseren Klebeigenschaften als Polypropylen eingesetzt wird.

Gegenüber dem aus dem Stand der Technik bekannten Verfahren bietet die Erfindung zahlreiche Vorteile, wie einen geringeren Montageaufwand beim Herstellen des erfindungsgemäßen flexiblen Verteilerrohres, insbesondere durch Entfall der Notwendigkeit des Ablängens einzelner Rohrabschnitte, wie ein geringeres Leckagerisiko aufgrund der reduzierten Anzahl von Anbindungsstellen im Hauptleitungsstrang, wie eine verminderte Wahrscheinlichkeit, dass Schmutz in die Leitung gelangen kann, sowie auch eine höhere Flexibilität bei der Montage, insofern der Abstand und die Ausrichtung der Abgänge bei gleichzeitiger geringer Teileanzahl zuverlässig bestimmungsgemäß ausgewählt werden können. Des Weiteren entstehen - verbunden mit der verringerten Anzahl der Arbeitsschritte und dem Handling von weniger Einzelteilen - auch geringere Montagekosten.

Ein vorzugsweise spritzgegossenes Verbinderteil kann als Steckverbinder, Kupplung, Rastverbinder, Klemmverbinder, Schraubverbinder, Bajonettverschluss oder als stoffschlüssig, wie durch ein Schweißen oder Kleben, wirkender Verbinder ausgebildet werden.

Insbesondere kann vorgesehen sein, dass der Innenkanal des als Endstück des Seitenrohres ausgebildeten Verbinderteils, der in den freien Durchflussquerschnitt des Hauptleitungsstranges mündet, in einem Winkel von 90° zur Längsachse des Hauptleitungsstranges angeordnet wird.

Das insbesondere als Endstück des Seitenrohres ausgebildete Verbinderteil kann als ein durch ein Schweißen oder Kleben, vorzugsweise im Heizelement-Stumpfschweißverfahren, wirkender Verbinder ausgebildet sein, wobei der Innenkanal des Seitenrohres in den freien Durchflussquerschnitt des Hauptleitungsstrangs mündet. Vorzugsweise wird das als Endstück des Seitenrohres ausgebildete Verbinderteil in einem Winkel von 90° zur Längsachse des Hauptleitungsstrangs angeordnet.

Im Hinblick auf ein mögliches nachfolgendes Anschweißen des Verbinderteils, insbesondere eines Endstücks eines Seitenrohres, können die Rohrwandungsstrukturen auch mit einer gestuften Geometrie ausgeführt werden. Eine derartige Stufung ist insofern für ein Anschweißen des Verbinderteils von Vorteil, als damit durch die Schaffung einer definierten Schweißfläche und einer gegenüber einer nicht gestuften Geometrie vergrößerten Wandstärke ein Kollabieren des Rohres bei der Schweißung vermieden werden kann.

Es ist, insbesondere mittels des Corrugatorwerkzeugs, auch möglich, im Bereich der Rohrwandungsstrukturen Sollbruchstellen auszuprägen, die ein erleichtertes Öffnen der Seitenabgänge ermöglichen.

Selbst die Herstellung eines Loches bzw. das Einbringen der Öffnung in den einstückig ausgeführten Längenbereich des Hauptleitungsstranges kann bereits während der Herstellung des Rohrstückes im Corrugator erfolgen. Dies kann z. B. durch ein Eindrücken eines Dornes in die Seitenstruktur oder ein Abscheren des oberen Teiles des Seitenabganges realisiert werden.

Die radial hervorstehenden Rohrwandungsstrukturen können dabei insbesondere in Glattwandabschnitten erzeugt werden, wobei bevorzugt zwischen den Bereichen mit diesen Rohrwandstrukturen Wellrohrabschnitte angeordnet werden, um einen einfachen Toleranzausgleich zu ermöglichen.

Zum Einbringen der Öffnungen in die Wandung des einstückigen Längenbereichs des Hauptleitungsstranges können - seitlich an dessen Rohrachse vorbei oder mittig durch die Rohrachse - unterschiedliche Verfahrensschritte eingesetzt werden, wie ein Auskreisen durch mechanisches Schneiden, ein Ausstanzen, ein Wasserstrahlschneiden, ein Ultraschallschneiden mittels einer Sonotrode, ein Lasern, wobei insbesondere eine Messung der Strahlungsintensität hinter der Rohrwandung im Rohrinneren zur Prozesssteuerung und/oder -überwachung herangezogen wird, ein gegebenenfalls mit einem heißem Dorn erfolgendes Punchen oder ein Einstechen eines heißen Dornes mit anschließendem, insbesondere durch Unterdruck bewirktem Hochziehen der aus dem Material der Rohrwandung entstehenden Schmelze, gegebenenfalls mit Ausbildung einer definierten Struktur für die Anbindung eines Spritzgussteils oder des erfindungsgemäßen Endstücks des Seitenrohres.

Die Montage des als Endstück des Seitenrohres ausgebildeten Verbinderteils am Hauptleitungsstrang erfolgt stoffschlüssig, durch ein Verkleben oder ein Verschweißen, insbesondere durch ein Laserverschweißen, mit den radial hervorstehenden Rohrwandungsstrukturen im einstückig ausgeführten Längenbereich.

Weitere vorteilhafte Ausgestaltungsmerkmale der Erfindung sind in den Unteransprüchen sowie der folgenden Beschreibung enthalten.

Anhand bevorzugter Ausführungsbeispiele soll im Folgenden die Erfindung näher erläutert werden. Dabei zeigen:

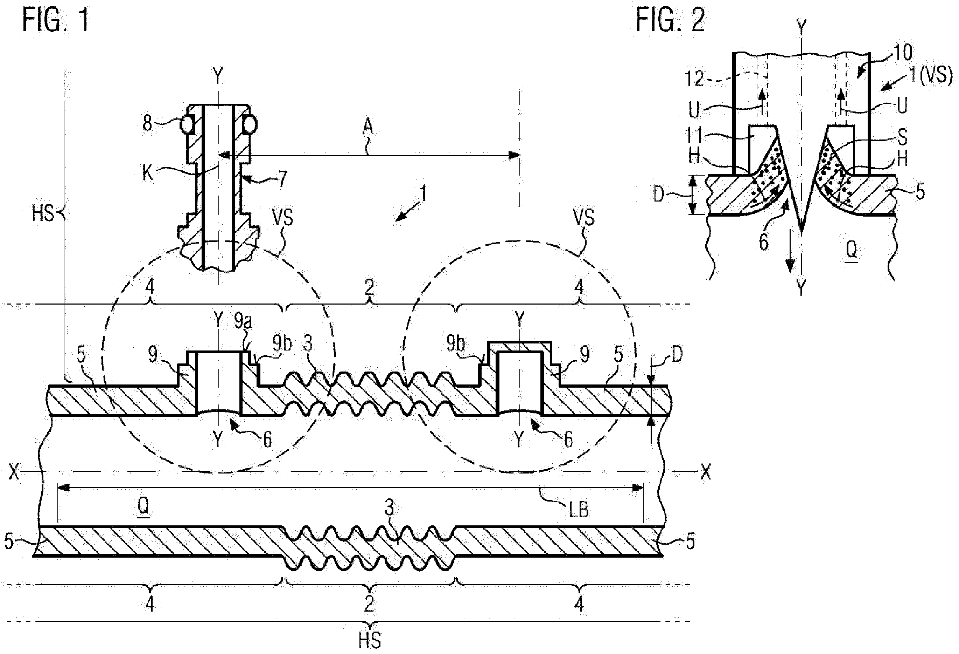

- Fig. 1: zur Veranschaulichung eines nicht erfindungsgemäßen Verfahrens, einen axialen Längsschnitt durch einen Teilbereich eines einstückig ausgeführten Längenbereichs des Hauptleitungsstranges einer ersten Ausführung eines herstellbaren flexiblen Verteilerrohres für Fluide, in Explosionsdarstellung mit einem partiell dargestellten spritzgegossenen Verbinderteil,
- Fig. 2: ebenfalls zur Veranschaulichung eines nicht erfindungsgemäßen Verfahrens, einen axialen Längs-Halbschnitt durch einen Teilbereich eines einstückig ausgeführten Längenbereichs des Hauptleitungsstranges einer zweiten Ausführung eines nicht erfindungsgemäß herstellbaren flexiblen Verteilerrohres für Fluide, insbesondere zur Veranschaulichung des Einbringens von Öffnungen in die Wandung vor der Montage eines spritzgegossenen Verbinderteils,

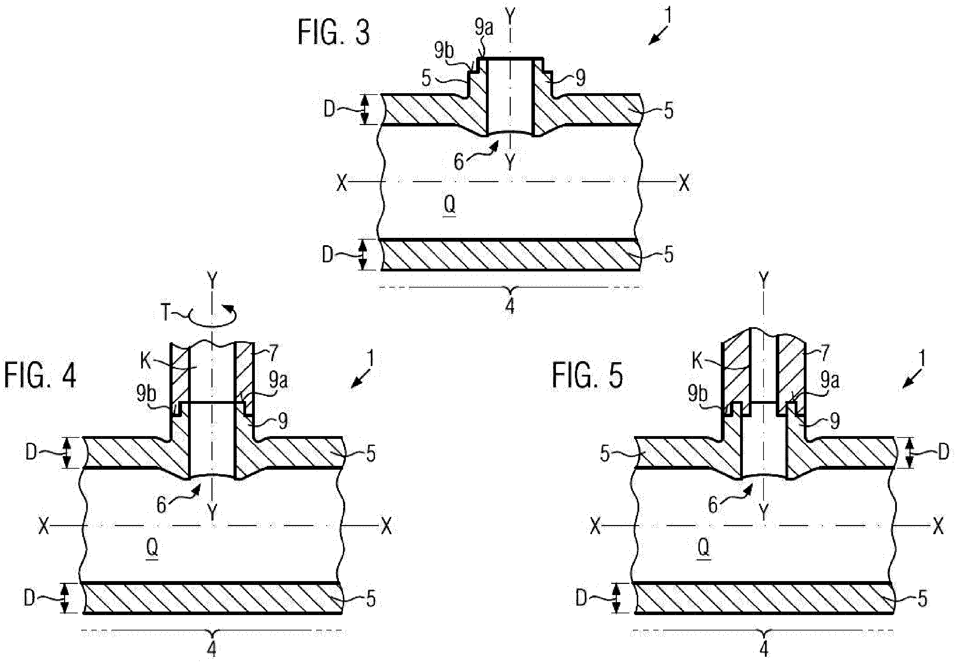

- Fig. 3: zur Veranschaulichung eines nicht erfindungsgemäßen Verfahrens, einen Axialschnitt durch einen Teilbereich eines einstückig ausgeführten Längenbereichs des Hauptleitungsstranges einer dritten Ausführung eines nicht erfindungsgemäß herstellbaren flexiblen Verteilerrohres für Fluide mit besonderer Darstellung einer radial hervorstehenden Rohrwandungsstruktur,
- Fig. 4 und 5: in Analogie zur Darstellung in Fig. 3, zwei Möglichkeiten der Montage eines spritzgegossenen Verbinderteils an einer radial hervorstehenden Rohrwandungsstruktur im einstückig ausgeführten Längenbereich des Hauptleitungsstranges,

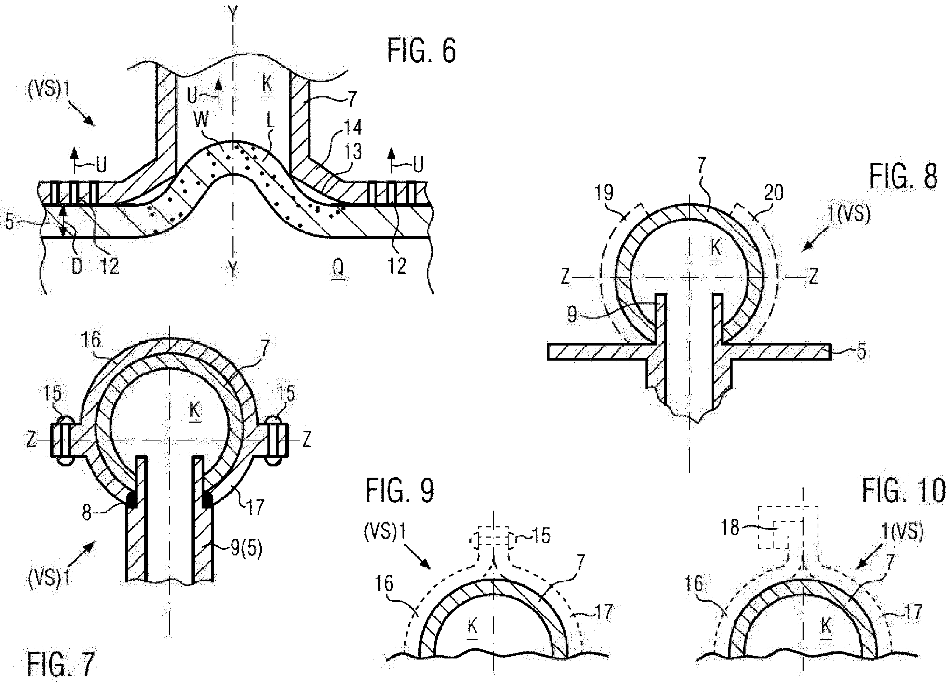

- Fig. 6: in Analogie zur Darstellung in Fig. 2, einen axialen Längs-Halbschnitt durch einen Teilbereich eines einstückig ausgeführten Längenbereichs des Hauptleitungsstranges einer vierten Ausführung eines nicht erfindungsgemäß herstellbaren flexiblen Verteilerrohres für Fluide, insbesondere zur Veranschaulichung einer weiteren Möglichkeit der Montage eines spritzgegossenen Verbinderteils im Hauptleitungsstrang bei einem nachfolgenden Einbringen von Öffnungen in die Wandung,
- Fig. 7 bis 10: axiale Längs-Halbschnitte durch jeweils einen Teilbereich eines einstückig ausgeführten Längenbereichs des Hauptleitungsstranges von vier weiteren Ausführungen eines nicht erfindungsgemäß herstellbaren flexiblen Verteilerrohres für Fluide, zur Veranschaulichung weitere Möglichkeiten der Montage des spritzgegossenen Verbinderteils an einer radial hervorstehenden Rohrwandungsstruktur,

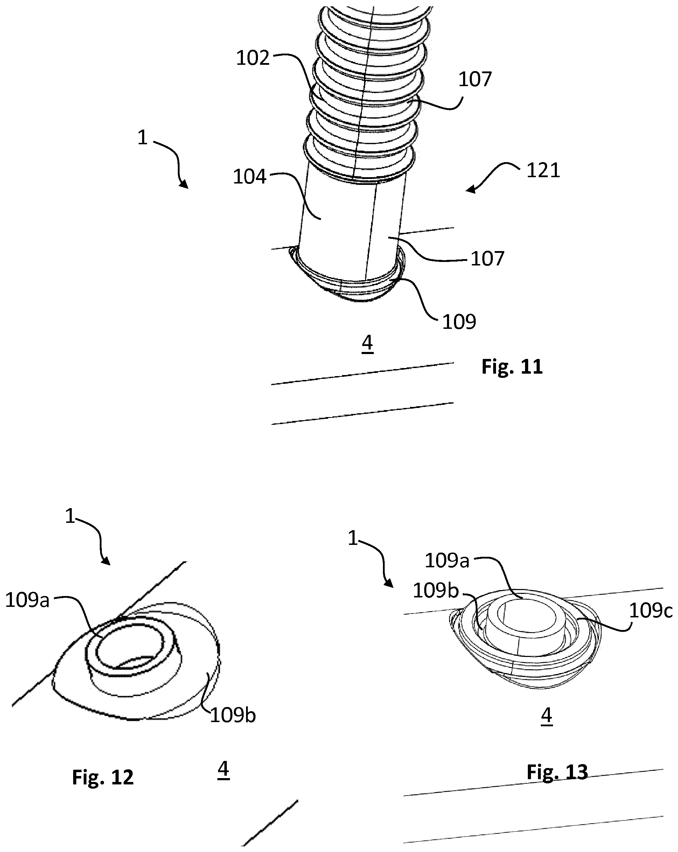

- Fig. 11: eine perspektivische Darstellung eines Verteilerrohres mit einem als Endstück eines Seitenrohres ausgebildeten Verbinderteil,
- Fig. 12: eine perspektivische Darstellung eines nach dem erfindungsgemäßen Verfahren hergestellten Verteilerrohres mit einer ersten Ausführung einer, als spezifische Schweißkonturen ausgebildeten, Rohrwandungsstruktur,
- Fig. 13: eine perspektivische Darstellung eines nach dem erfindungsgemäßen Verfahren hergestellten Verteilerrohres mit einer weiteren Ausführung einer, als spezifische Schweißkonturen ausgebildeten Rohrwandungsstruktur, und

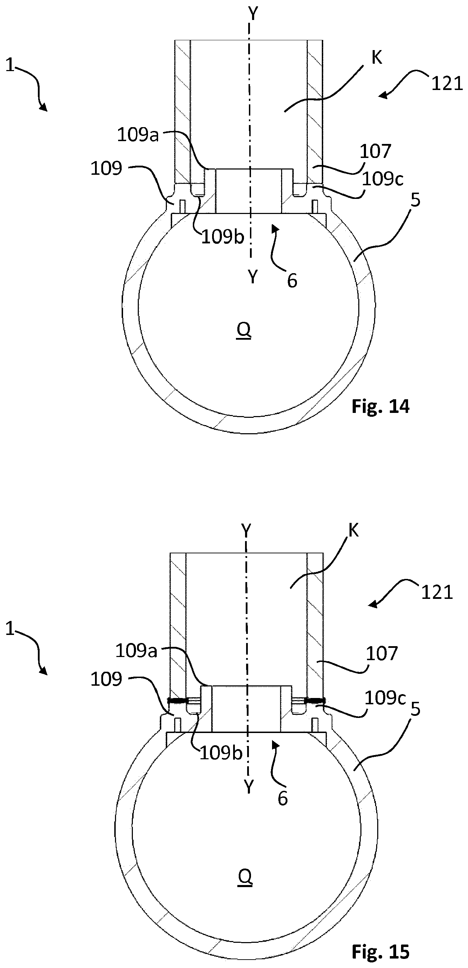

- Fig. 14 und 15: zur Veranschaulichung des erfindungsgemäßen Verfahrens, zwei Querschnittsansichten jeweils auf einen freien Durchflussquerschnitt eines Hauptleitungsstrangs durch einen Teilbereich einer spezifischen Schweißkontur und ein daran zu verbindendes, als Endstück eines Seitenrohres ausgebildetes Verbinderteil, vor und nach einer stoffschlüssigen Verbindung.

Zu der anschließenden Beschreibung wird ausdrücklich betont, dass die Erfindung nicht auf die Ausführungsbeispiele und dabei auch nicht auf alle oder mehrere Merkmale von in einem Ausführungsbeispiel jeweils beschriebenen Merkmalskombinationen beschränkt ist. Vielmehr kann jedes einzelne Teilmerkmal der Ausführungsbeispiele auch losgelöst von allen anderen im Zusammenhang damit beschriebenen Teilmerkmalen für sich und auch in Kombination mit beliebigen Merkmalen des anderen Ausführungsbeispiels eine erfinderische Bedeutung haben.

In den Figuren der Zeichnung sind dieselben Teile auch stets mit denselben Bezugszeichen versehen, so dass sie in der Regel auch jeweils nur einmal beschrieben werden.

Wie sich zunächst aus Fig. 1 ergibt, dient das Verfahren zum Herstellen eines Verteilerrohres 1 für Fluide, welches einen Hauptleitungsstrang HS umfasst, in dem Wellrohrabschnitte 2, die eine gewellte Wandung 3 aufweisen, und/oder Glattrohrabschnitte 4, die eine glatte Wandung 5 aufweisen, angeordnet sind. Die jeweilige Wandung 3, 5 umschließt einen freien Durchflussquerschnitt Q für das Fluid, und wobei sich im Hauptleitungsstrang HS Verteilerschnittstellen VS zum Anschluss von Nebenleitungssträngen NS befinden.

Gemäß der Erfindung werden zur Herstellung von zwei oder mehr Verteilerschnittstellen VS an zwei oder mehr ausgewählten Stellen in einem einstückig ausgeführten Längenbereich LB des Hauptleitungsstranges HS Öffnungen 6 in die Wandung 5 eingebracht, wonach oder nachdem an den ausgewählten Stellen jeweils eine Montage eines als Endstück eines Seitenrohres 121 ausgebildeten Verbinderteils 107 erfolgt, welches einen Innenkanal K aufweist, der mit dem freien Durchflussquerschnitt Q des Hauptleitungsstranges HS in Verbindung steht.

In den dargestellten Ausführungen ist vorgesehen, dass die Achse Y-Y des Innenkanals K des vorzugsweise spritzgegossenen Verbinderteils 7, siehe Fig. 1, oder des erfindungsgemäß als Endstück des Seitenrohres 121 ausgebildeten Verbinderteils 107, siehe Fig. 11, in einem Winkel von 90° zur Längsachse X-X des Hauptleitungsstranges HS angeordnet wird.

Das spritzgegossene Verbinderteil 7 kann als Steckverbinder, Kupplung, Rastverbinder, Klemmverbinder, Schraubverbinder, Bajonettverschluss oder als stoffschlüssig, wie durch ein Schweißen oder Kleben, wirkender Verbinder ausgebildet werden und beispielsweise mit einer Dichtung 8 bestückt werden.

Das insbesondere als Endstück des Seitenrohres 121 ausgebildete Verbinderteil 107 kann als ein durch ein Schweißen oder Kleben, vorzugsweise im Heizelement-Stumpfschweißverfahren, wirkender Verbinder ausgebildet sein, wobei der Innenkanal K des Seitenrohres 121 in den freien Durchflussquerschnitt Q des Hauptleitungsstranges HS mündet.

Das Seitenrohr 121 kann als ein Wellrohr oder ein Glattrohr bzw., wie in Figur 11 dargestellt, als ein Rohr mit Wellrohrbereichen 102 und mit Glattrohrbereichen 104 ausgebildet sein oder ausgebildet werden. Vorzugsweise ist das mit dem Hauptleitungsstrang HS zu verbindende Endstück als Glattrohrbereich 104 ausgebildet. Eine derartige glatte Ausbildung des Endstücks versteift die Übergangsstelle zwischen dem Innenkanal K des Seitenrohrs 121 in dem freien Durchflussquerschnitt Q des Hauptleitungsstrangs HS und die, vereinfacht durch Schweißen oder Kleben, vorzugsweise im Heizelement-Stumpfschweißverfahren erzeugte Verbindung.

Besonders bevorzugt ist an dem, dem Endstück des Seitenrohres 121 gegenüberliegenden Ende eine Steckgeometrie angeformt. Hierbei kann die Steckgeometrie vorteilhaft derart gestaltet sein, dass eine direkte Anbindung des Innenkanals K mit einem Anschlusselement, insbesondere einer Kühlplatte, möglich ist.

Der einstückig ausgeführte Längenbereich LB des Hauptleitungsstranges HS, in den die Öffnungen 6 in die Wandung 5 eingebracht werden, wird unter Einsatz eines Corrugators hergestellt, wobei auf diese Weise mindestens ein Wellrohrabschnitt 2 und ein Glattrohrabschnitt 4 erzeugt werden. Die Wellrohrabschnitte 2 gewährleisten dabei aufgrund ihrer erhöhten Deformationsfähigkeit - sie sind ja bei gleicher Wandstärke D dehnbarer, biegbarer und stauchbarer als Glattrohrabschnitte 4 aus dem gleichen Material - eine gute Verlegbarkeit des erfindungsgemäß hergestellten Verteilerrohres 1 sowie auch einen einfachen Toleranzausgleich zwischen zwei Verteilerschnittstellen VS.

Bekanntermaßen ist ein Corrugator eine Maschine, die hauptsächlich zur Herstellung von gewelltem Kunststoffrohr (Wellrohrabschnitte 2) Anwendung findet. Als Hauptbestandteile umfasst ein Corrugator einen Spritzkopf, oftmals einen Kühldorn, Formbacken, eine Vakuumabsaugung und ein Formluftsystem. Im Spritzkopf wird ein aus einem Extruder kommender Schmelzestrom zu einem Schlauch geformt, wobei sich eine Wanddicke D der gewellten Wandung 3 bzw. im unverformten Zustand noch glatten Wandung 5 über einen Düsenspalt einstellen lässt. Ein von einem Kühlmedium durchströmte Kühldorn ist - sofern vorhanden - insbesondere zur Herstellung von doppelwandigem Wellrohr mit glatter Innenhaut geeignet. Er leitet die Wärme der Innenhaut ab und dient gleichzeitig einer Kalibrierung. Die Formbacken stellen die Negativform des Wellrohres dar. In ihnen wird aus dem Kunststoff die vorher im Extruder eingebrachte Wärme größtenteils wieder abgeführt, und daher werden die Formbacken ebenfalls gekühlt. In neueren Corrugator-Anlagen wird der im Spritzkopf gebildete Kunststoffschlauch über Vakuum in die Formbacken bzw. an den Kühldorn gesaugt. Größere Rohrdurchmesser können nur unter Zuhilfenahme einer Vakuumabsaugung hergestellt werden. Die Formluft strömt bei einfachem Wellrohr hinter dem Kunststoffschlauch aus einer Düse und erzeugt dort einen Überdruck, der die Schmelze in die Formbacken drückt. Damit die Formluft nicht durch das Rohr entweichen kann, wird dabei ein Dichtdorn verwendet, der über eine Stange mit der Düse verbunden ist und sich im Auslauf des Corrugators befindet. Vorteilhafterweise können mittels eines Corrugators auch Verbindungselemente für Rohre erzeugt werden sowie - wie in Fig. 1 dargestellt - alternierende Wellrohrabschnitte 2 und Glattrohrabschnitte 4.

Auch ist es, insbesondere mittels speziell gestalteter Formbacken eines Corrugators, möglich, erfindungsgemäß an den ausgewählten Stellen im Längenbereich LB sequentiell radial hervorstehende, bevorzugt rotationssymmetrisch ausgebildete, Rohrwandungsstrukturen 9, 109, nämlich spezifische Schweißkonturen 109 zur stoffschlüssigen Verbindung mit dem als Endstück eines Seitenrohres 121 ausgebildeten Verbinderteils 107, zu erzeugen, die entweder verschlossen bleiben können (in Fig. 1 rechts gezeigt) oder an denen nachfolgend bedarfsweise die Öffnungen 6 in die Wandung 5 eingebracht werden, so dass ein offener Anschlussstutzen entsteht (in Fig. 1 links, sowie in den Figuren 12 und 13 gezeigt). Die Herstellung des Loches (Öffnung 6) kann auch während der Herstellung im Corrugator erfolgen, z. B. durch das Eindrücken eines Dornes in die Seitenstruktur oder durch ein Abscheren des oberen Teiles des Seitenabganges (Rohrwandungsstruktur 9, 109).

An den radial hervorstehenden Rohrwandungsstrukturen 9, 109 können dabei, insbesondere im Hinblick auf die spätere Verbindung mit dem Formteil (Verbinderteil 7, 107) - siehe dazu auch Fig. 3 bis 5 und Figuren 12 bis 15 und nachfolgende Erläuterungen - Stufen 9a, 9b, 109a, 109b ausgebildet werden.

Die als spezifische Schweißkontur 109 erzeugte Rohrwandungsstruktur 109, siehe in Fig. 12 bis 15, ist in den Hauptleitungsstrang eingelassen, besonders bevorzugt während der Herstellung im Corrugator. Damit wird eine ausreichende Wanddicke für eine Verbindung mit dem als Endstück des Seitenrohres 121 ausgebildeten Verbinderteil 107 im Schweißverfahren, insbesondere im Heizelement-Stumpfschweißverfahren, gewährleistet.

Die Herstellung kann mit Vorteil als Meterware erfolgen, an der nur nach Bedarf ein Ablängen von in den Hauptleitungsstrang HS einzubindenden Rohrstücken (einstückige Längenbereiche LB) vorgenommen wird. Dadurch besteht bei minimalisiertem Aufwand eine hohe Montageflexiblität, d. h. Anpassbarkeit an unterschiedliche äußere Systembedingungen.

Grundsätzlich ist es möglich, derartige Strukturen überall in der Wandung 3, 5 zu erzeugen, jedoch ist es bevorzugt, die radial hervorstehenden Rohrwandungsstrukturen 9, 109 in Glattwandabschnitten 4 vorzusehen, wobei bevorzugt zwischen Abschnitten 4 mit den radialen Rohrwandstrukturen 9, 109 ein oder mehrere Wellrohrabschnitte 2 angeordnet werden oder wobei die Glattwandabschnitte 4 jeweils zwischen Wellrohrabschnitten 2 vorgesehen werden. Hiermit verbunden ist eine vorteilhaft hohe Flexibilität bei der Montage, wobei bei geringer Teileanzahl ein - in der Regel Toleranzschwankungen unterworfener - Abstand A zwischen den Verteilerschnittstellen VS zuverlässig eingehalten werden kann.

Wie bereits erwähnt, können die Öffnungen 6 auf verschiedene Art und Weise in die Wandung 5 eingebracht werden. Fig. 2 zeigt exemplarisch das Einstechen eines heißen Dornes 10, verbunden mit einem Hochziehen (Pfeile H) der dabei aus der Rohrwandung 5 entstehenden Schmelze S durch einen in über Vakuumkanäle 12 angelegten Unterdruck (Pfeile U). Durch einen Formraum 11 im Dorn 10 kann auch hier - wenn gewünscht - die Ausbildung einer definierten Rohrwandungsstruktur 9, 109 für die im weiteren Verfahrensverlauf erfolgende Anbindung des bevorzugten Spritzguss-Verbinderteils 7 oder insbesondere des als Endstück des Seitenrohres 121 ausgebildeten Verbinderteils 107 vorgenommen werden. Wie Fig. 3 bis 5 und 11 bis 15 veranschaulichen, wird an eine offene Rohrwandungs-Seitenstruktur 9, 109 (Fig. 3 und 12 bis 14) im nächsten erfindungsgemäßen Schritt das als Endstück des Seitenrohres 121 ausgebildete Verbinderteil 107 montiert (Fig. 4,5, 11 und 15). Dabei kann zur Führung und gegebenenfalls Fixierung ein (nicht dargestellter) Glattdorn vorgesehen werden, der in die Öffnung 6 der Wandung 5 eintaucht. Ein derartiger Glattdorn wirkt auch als Positionierhilfe für das Verbinderteil 7, 107 und als Instrument zur Kontrolle, ob überhaupt eine Öffnung 6 vorhanden und ob deren Durchmesser groß genug ist. Außerdem wird durch den Dorn die Fähigkeit der Verbindung zur Aufnahme von Seitenkräften verbessert. Der Glattdorn kann mit einem Schnapphaken versehen sein, der hinter der Rohrwandung 5 im Querschnitt Q einrastet und stabilisierend ein Herausfallen im weiteren Montageprozess verhindert. Denkbar ist es auch, eine Wulst an der Außenwand des Glattdornes vorzusehen, die einen Partikeleintritt in das Rohr im Verlauf des Fertigungsprozesses verhindert, wobei alternativ auch eine im Zweikomponenten-Spritzgieß-Verfahren angebrachte Dichtung möglich ist.

Anschließend wird das Spritzguss-Verbinderteil 7 oder insbesondere das erfindungsgemäß als Endstück des Seitenrohres 121 ausgebildete Verbinderteil 107 stoffschlüssig, z. B. durch ein Rotations(-reib-)schweißen an der Seitenstruktur 9, 109 fixiert. Besonders bevorzugt wird das als Endstück des Seitenrohres 121 ausgebildete Verbinderteil 107, entsprechend der in den Figuren 11 bis 15 dargestellten Ausführung, im Heizelement-Stumpfschweißverfahren mit der Rohrwandungsstruktur 109 verbunden. Der Pfeil T in Fig. 4 symbolisiert dabei eine Drehung des Verbinderteils 7, 107 um seine Längsachse Y-Y. Unter dem Aspekt der Vermeidung von Unwuchten ist dabei eine Rotationssymmetrie des Verbinderteils 7, 107 hinsichtlich der Längsachse Y-Y von besonderem Vorteil. Die Anbindung des Verbinderteils 7, 107 an der - bevorzugt mit den Stufen 9a, 9b, 109a, 109b ausgebildeten - Rohrwandungsstruktur 9, 109 kann sowohl stirnseitig, als auch auf der Außenseite (beispielhaft in Fig. 4) oder auf der Innen- und Außenseite der Seitenstruktur 9, 109 (beispielhaft in Fig. 5) erfolgen. Die Anbindung kann so schnell erfolgen, dass eine Weiterleitung der durch die Reibung entstehenden Wärme so gering ist, dass die für den Prozess notwendige Anpresskraft nicht zu einem Kollabieren des Rohres führt. Insbesondere die gestufte Struktur 9a, 9b, 109a, 109b ist dabei für die Ausführung der Schweißung von Vorteil, insofern sie wesentlich zur Vermeidung eines Kollabierens des Rohres, der Schaffung einer definierten Schweißfläche und einer vergrößerten Wandstärke beiträgt. Bedarfsweise ist es zur Verbesserung des Stoffschlusses des Weiteren möglich, die Flächen, auf denen das Spritzgussteil 7 oder insbesondere das erfindungsgemäß als Endstück des Seitenrohres 121 ausgebildete Verbinderteil 107 angebunden wird, vor der Schweißung, z. B durch einen IR-Laser, ein Heizelement o. dgl., vorzuwärmen.

In den Fig. 14 und 15 ist ein weiteres vorteilhaftes Verbindungsverfahren zur Verbindung des als Endstück des Seitenrohres 121 ausgebildeten Verbinderteils 107 mit der als spezifische Schweißkontur 109 ausgebildeten Rohrwandungsstruktur dargestellt. Dieses Verfahren ist vorzugsweise in Verbindung mit dem Heizelement-Stumpfschweißverfahren anzuwenden. Vorzugsweise formt die Stufung 109a, 109b der spezifischen Schweißkontur 109 einen radial senkrecht zum Hauptleitungsstrang zylindrisch hervorstehenden Stutzen. Dieser Stutzen verbindet den Innenkanal K des Seitenrohres 121 mit dem freien Durchflussquerschnitt Q des Hauptleitungsstrangs HS fluidisch. Insbesondere vor dem stoffschlüssigen Verbinden des als Endstück des Seitenrohres 121 ausgebildeten Verbinderteils 107 mit der spezifischen Schweißkontur 109 wird der Stutzen in den Innenkanal K, insbesondere in einer Spielpassung, eingeführt. Das Endstück des Seitenrohres 121 liegt dabei auf einer ihr zugerichteten Fläche auf, wobei diese Fläche regelmäßig die radial von der Längsachse X-X des Hauptleitungsstrangs abweisenden Stufen 109b sein kann. Eine für die Auflage und Verbindung mit dem Endstück des Seitenrohres 121 ausgebildete Stufe 109b ist beispielsweise in Figur 12 dargestellt.

In den Fig. 13 bis 15 ist eine besonders vorteilhafte spezifische Schweißkontur 109 dargestellt. Wie bei der Ausführung gemäß Fig. 12 liegt das Endstück des Seitenrohres 121 dabei auf einer ihr zugerichteten Fläche auf, wobei diese nicht entsprechend der Ausführung von Fig. 12 die Stufe 109b ist. Vorteilhaft weist die spezifische Schweißkontur 109 der in den Fig. 13 bis 15 dargestellten Ausführung einen als die Stufung 109a, 109b, insbesondere die zylindrische hervorstehende Geometrie, umlaufende Rippe 109c ausgebildeten Schweißsockel 109c auf. Das Endstück des Seitenrohres 121 wird dabei vorzugsweise in einem ersten Schritt bis zur Anlage auf dem Schweißsockel 109c herangeführt, siehe Fig. 14. In einem nächsten Schritt wird insbesondere mittels eines Heizelement-Stumpfschweißverfahrens das Endstück mit der spezifischen Schweißstruktur 109 im Bereich des Schweißsockels 109c bzw. mit dem Schweißsockel verschweißt. Die die Stufung 109a, 109b umlaufende Rippenstruktur hat dabei den Vorteil, dass Schmelzaustrieb beim Schweißen in einer umlaufenden Nut im Bereich der Stufe 109b aufgefangen wird und dadurch eine Verunreinigung des freien Durchflussquerschnitts Q effektiv verhindert wird. Diese Betrachtung ist analog auf eine Klebeverbindung zu übertragen, bei welcher durch die umlaufende Rippenstruktur von den Kontaktflächen zwischen Schweißsockel 109c und Endstück des Seitenrohres 121 verdrängter Klebstoff nicht in den freien Durchflussquerschnitts Q gelangen kann.

Soll statt durch das Reibschweißen eine lasergeschweißte Verbindung erzeugt werden, durch die aufgrund der beim Laserschweißen möglichen nur punktuellen bzw. linienförmigen Wärmeeinbringung eine noch weiter verringerte Gefahr des Kollabierens des Rohres besteht, so sind dabei die folgenden technischen Maßnahmen - wahlweise einzeln oder in geeigneter Verbindung miteinander - bevorzugt: das Vorwärmen des bevorzugten Spritzgussteiles 7 oder insbesondere des als Endstück des Seitenrohres 121 ausgebildeten Verbinderteils 107 zur Verbesserung der Schweißung, der Einsatz eines PP-Rohres mit Rußfüllung zur verbesserten Laserabsorption, die Strukturierung der Schweißflächen zum Ausgleich der gekrümmten Rohr-Außenoberfläche und das - vorzugsweise im Corrugator erfolgende - Anbringen einer Schweißkontur an das Rohr.

Fig. 4 und 5 können auch als grundsätzlich exemplarisch für die ebenfalls stoffschlüssig wirkende Verbindung durch Kleben angesehen werden. Dort, wo sich beim Schweißen die Schweißnähte befinden, kann alternativ eine Klebstoffschicht vorhanden sein, wobei insbesondere die Verwendung eines Klebers mit über die Lebensdauer des erfindungsgemäßen Verteilerrohres 1 hinweg hoher Medienresistenz, insbesondere gegenüber Kühlwasser, bevorzugt wird.

Gegebenenfalls kann auch der Einsatz einer Dichtung notwendig sein, um den Kontakt des Klebers zum Kühlmedium zu verhindern.

Wie bereits erwähnt, kann dabei mit Vorteil ein Mehrlagenrohr mit einer Innenschicht aus Polypropylen (PP) und einer Außenschicht mit vergleichsweise besseren Klebeigenschaften, wie einer Außenschicht aus Polyamid (PA) Verwendung finden.

Allerdings ist bei PP im Vergleich zu PA die Wasseraufnahme deutlich geringer, und somit sind auch seine mechanischen Langzeiteigenschaften besser. Ferner weist PP - verglichen mit PA - eine erheblich geringere Quellung in einem Wasser-Glykol-Gemisch auf, wodurch sich im Betriebszustand in der Verteilerleitung 1 auftretende Spannungen reduzieren. Alternativ kann daher auch ein einlagiges PP-Rohr und -Spritzgussteil, insbesondere nach vorheriger Aktivierung des Materials durch Beflammung, Plasmabehandlung und/oder Coronabehandlung, verwendet werden.

Die der Fig. 6 zu entnehmende, vierte Ausführung eines herstellbaren flexiblen Verteilerrohres 1 zeigt - ähnlich wie Fig. 2 - einen axialen Längs-Halbschnitt durch einen Teilbereich eines einstückig ausgeführten Längenbereichs LB des Hauptleitungsstranges HS. Die Zeichnung dient dabei der Veranschaulichung einer weiteren Möglichkeit der Montage eines vorzugsweise spritzgegossenen Verbinderteils 7 an den ausgewählten Stellen in dem einstückig ausgeführten Längenbereich LB des Hauptleitungsstranges HS. Ein wesentlicher Unterschied zu den vorangehend beschriebenen Ausführungen der Erfindung besteht dabei darin, dass die Montage des vorzugsweise spritzgegossenen Verbinderteils 7 erfolgt, bevor in dem einstückig ausgeführten Längenbereich LB des Hauptleitungsstranges HS die Öffnungen 6 in die Wandung 5 eingebracht werden.

Dabei erfolgt die Herstellung der Verteilerschnittstelle VS, also das Anbringen des Abganges für den Nebenstrang NS, mittels eines Vorwärmens des Rohrstückes des einstückig ausgeführten Längenbereiches LB des Hauptleitungsstranges HS und ein partielles, durch einen Unterdruck (Pfeile U) bewirktes Ansaugen, insbesondere über den Kanal K des Verbinderteils 7 an der Stelle, wo die Öffnung 6 im Hauptleitungsstrang HS erzeugt werden soll. Im Verbinderteil 7 können dabei optional - wie Fig. 6 ebenfalls zu entnehmen ist - zusätzlich Vakuumkanäle 12 vorgesehen sein, um ein optimal bündiges Anliegen des Verbinderteils 7 am Rohrstück zu gewährleisten. Sowohl zum Vorwärmen des Rohres, als auch zum gleichzeitigen Vorwärmen des Verbinderteils 7 kann mit Vorteil ein IR-Laser, ein Heizelement oder eine andere geeignete Wärmequelle eingesetzt werden. Danach erfolgt ein Aufdrücken des Verbinderteils 7 und das Ansaugen des erweichten Rohrleitungsbereiches W über den Unterdruck U im Kanal des Verbinderteils 7. Hieran schließt sich das Herausschneiden einer Linse L aus der Rohrwandung 5 an, wobei diese Linse L dann über den Unterdruck U oder mittels einer Entnahmevorrichtung entfernt wird.

Im Hinblick auf eine derartige Verfahrensführung zur Verbindungsherstellung zwischen dem Verbinderteil 7 und dem einstückig ausgeführten Längenbereich LB des Hauptleitungsstranges HS ist eine zweikantige Ausführung des Verbinderteils 7 besonders vorteilhaft. So zeigt Fig. 6 einerseits eine - der Längsachse X-X des Hauptleitungsstrangs HS näher gelagerte - abgerundete und "weiche" - Kante 13, die insbesondere einer optimalen Anlage des Rohrstückes LB am bevorzugten Spritzgussteil 7 förderlich ist, und andererseits eine - der Längsachse X-X des Hauptleitungsstrangs HS ferner gelagerte - scharfe und "harte" - Kante 14, die insbesondere einer Vereinfachung der Herstellung der Öffnung 6 dient, indem sie die Ausbildung einer Sollbruchstelle begünstigt.

Die durch Fig. 7 bis 10 veranschaulichten weiteren Varianten der Ausführung des nicht erfindungsgemäßen Verfahrens beziehen sich allesamt auf mechanische, vom Wesen her insbesondere kraftformschlüssige, Montagearten des vorzugsweise spritzgegossenen Verbinderteils 7 an dem einstückig ausgeführten Längenbereich LB.

So zeigen Fig. 7 und 9 Verbindungen, die unter Einsatz von Nieten 15 hergestellt wurden. Charakteristisch für diese mechanischen Verbindungen ist auch ein zumindest bereichsweises Umclipsen des Verbinderteils 7 und des einstückig ausgeführten Längenbereiches LB.

Zur Herstellung der Verbindungen kann ein (nicht dargestellter) Glattdorn als Führung am Verbinderteil 7 eingesetzt werden, wobei vor der Montage des bevorzugten Spritzgussteils 7, insbesondere durch ein Punchen oder Lochschneiden, die Herstellung der jeweiligen Öffnung 6 erfolgt.

Wie Fig. 7 zeigt, kann über eine Dichtung 8 ein Abdichten zwischen dem Rohr (dargestellt ist eine glatte Wandung 5 der Rohrwandungsstruktur 9) und dem bevorzugten Spritzgussteil 7 vorgesehen werden.

Die Fixierung des bevorzugten Spritzgussteils 7 kann bei den mechanischen Verbindungen beispielsweise durch Halbschalen 16, 17 erfolgen (Fig. 7, 9 und 10), die von oben und unten im Hinblick auf die Querachse Z-Z (Fig. 7) oder von rechts und links (Fig. 9 und 10) mit um das bevorzugte Spritzgussteil 7 gelegt werden. Durch ein Umfalten der Enden der Halbschalen 16, 17 umeinander unter Bildung einer Falzkante 18 (Fig. 10) oder durch eine Fixierung mittels eines weiteren Befestigungselements (z. B. mittels der bereits erwähnten Niete 15) ist dabei eine weitere Stabilitätserhöhung der Verbindung möglich

Fig. 8 zeigt die Ausbildung einer Verbindung unter Einsatz von zwei Flügeln 19, 20 am Spitzgussteil 7, die erwärmt und dann um das Rohr gebogen werden. Hier kann ein Entfall der in Fig. 7 dargestellten Dichtung 8 erfolgen, da sich neben der mechanischen Verbindung auch eine stoffschlüssige, adhäsive Verbindung ausbilden kann.

Der Fachmann kann die Erfindung auch durch weitere zweckmäßige technische Ausgestaltungsformen ergänzen, ohne dass der Rahmen der Erfindung verlassen wird. So kann z. B. der Innenkanal K des als Endstück des Seitenrohres 121 ausgebildeten Verbinderteils 107 mit seiner Achse (Y-Y) in einem von 90° abweichenden Winkel zur Längsachse X-X des Hauptleitungsstranges HS angeordnet werden.

Auch dem Produkt (Verteilerrohr 1 für Fluide) des erfindungsgemäßen Verfahrens wird erfinderische Bedeutung beigemessen.

### Bezugszeichen

- 1: Verteilerrohr
- 2: Wellrohrabschnitt von 1
- 102: Wellrohrbereich von 121
- 3: gewellte Wandung 3 in 2
- 4: Glattrohrabschnitt von 1
- 104: Glattrohrbereich von 121
- 5: glatte Wandung in 4
- 6: Öffnung in HS
- 7, 107: Verbinderteil
- 8: Dichtung an 7 (Fig. 1) bzw.an 9 (Fig. 7)
- 9: Rohrwandungsstruktur in HS
- 9a, 9b: Stufen in 9
- 109: Rohrwandungsstrukturen
- 109a, 109b: Stufen in 109
- 109c: Schweißsockel
- 10: Dorn
- 11: Formraum in 10
- 12: Vakuumkanal in 10l
- 13: abgerundete Kante von 7
- 14: scharfe Kante von 7
- 15: Niet
- 16, 17: Halbschalen
- 18: Falzkante
- 19, 20: Flügel um 7/9
- 121: Seitenrohr
- A: Abstand zwischen VS
- D: Wandstärke von 3, 5
- H: Hochziehen von S
- HS: Hauptleitungsstrang von 1
- K: Innenkanal von 7
- L: Linse (Fig. 6)
- LB: einstückiger Längenbereich in HS
- NS: Nebenleitungsstrang von 1
- Q: Durchflussquerschnitt von HS
- S: Schmelze aus 5
- T: Drehung von 7
- U: Unterdruck (Fig. 2, 6)
- VS: Verteilerschnittstelle von 1
- X-X: Längsachse von 1
- Y-Y: Längsachse von 7
- Z-Z: Querachse von 1

## Patentansprüche

1. Verfahren zum Herstellen eines Verteilerrohres (1) für Fluide, welches einen Hauptleitungsstrang (HS) umfasst, in dem Wellrohrabschnitte (2), die eine gewellte Wandung (3) aufweisen, und Glattrohrabschnitte (4), die eine glatte Wandung (5) aufweisen, angeordnet sind, wobei die jeweilige Wandung (3, 5) einen freien Durchflussquerschnitt (Q) für das Fluid umschließt, und wobei sich im Hauptleitungsstrang (HS) Verteilerschnittstellen (VS) zum Anschluss von Nebenleitungssträngen (NS) befinden, wobei ein einstückig ausgeführter Längenbereich (LB) des Hauptleitungsstranges (S) und/oder ein Verbinderteil (107) aus einem thermoplastischen Kunststoff hergestellt wird und
dass zur Herstellung von zwei oder mehr Verteilerschnittstellen (VS) an zwei oder mehr ausgewählten Stellen in dem einstückig ausgeführten Längenbereich (LB) des Hauptleitungsstranges (HS) Öffnungen (6) in die Wandung (5) eingebracht werden, wonach an den ausgewählten Stellen jeweils eine Montage eines Verbinderteils (107) erfolgt, oder nachdem an den ausgewählten Stellen jeweils eine Montage eines Verbinderteils (107) erfolgt ist, wobei das Verbinderteil einen Innenkanal (K) aufweist, der mit dem freien Durchflussquerschnitt (Q) des Hauptleitungsstranges (HS) in Verbindung steht und der einstückig ausgeführte Längenbereich (LB) des Hauptleitungsstranges (HS), in den die Öffnungen (6) in die Wandung (5) eingebracht werden, unter Einsatz eines Corrugators hergestellt wird, wobei auf diese Weise mindestens ein Wellrohrabschnitt (2) und ein Glattrohrabschnitt (4) erzeugt werden,
**dadurch gekennzeichnet, dass** an ausgewählten Stellen in dem einstückig ausgeführten Längenbereich (LB) sequentiell radial hervorstehende Rohrwandungsstrukturen (9, 109), nämlich spezifische Schweißkonturen (109) zur stoffschlüssigen Verbindung mit einem als Endstück eines Seitenrohres (121) ausgebildeten Verbinderteils (107), erzeugt werden, die verschlossen bleiben oder an denen bedarfsweise die Öffnungen (6) in die Wandung (5) eingebracht werden, wobei die spezifischen Schweißkonturen (109) in den Hauptleitungsstrang eingelassen werden, um eine ausreichende Wanddicke für die Verbindung mit dem als Endstück des Seitenrohres (121) ausgebildeten Verbinderteils (107) im Schweißverfahren zu gewährleisten, und die Montage des Verbinderteils (107) durch ein Verkleben oder ein Verschweißen mit den radial hervorstehenden Rohrwandungsstrukturen (9, 109) im einstückig ausgeführten Längenbereich (LB) erfolgt.

2. Verfahren nach Anspruch 1,
**dadurch gekennzeichnet, dass** der einstückig ausgeführte Längenbereich (LB) des Hauptleitungsstranges (S) und/oder das Verbinderteil (107) aus einem Polypropylen- und/oder aus einem Polyamidwerkstoff, hergestellt wird.

3. Verfahren nach Anspruch 1 oder 2,
**dadurch gekennzeichnet, dass** der einstückig ausgeführte Längenbereich (LB) des Hauptleitungsstranges (HS) aus einem Polypropylenwerkstoff mit Ruß als Füllstoff hergestellt wird.

4. Verfahren nach einem der Ansprüche 1 bis 3,
**dadurch gekennzeichnet, dass** der einstückig ausgeführte Längenbereich (LB) des Hauptleitungsstranges (HS), insbesondere durch Koextrusion, zumindest doppelwandig ausgebildet und/oder mit einer Wandbeschichtung überzogen wird.

5. Verfahren nach einem der Ansprüche 1 bis 4,
**dadurch gekennzeichnet, dass** der einstückig ausgeführte Längenbereich (LB) des Hauptleitungsstranges (S) als Mehrlagenrohr ausgeführt wird, wobei in der Rohrinnenschicht ein Polypropylenwerkstoff und in der Außenschicht ein Polyamidwerkstoff eingesetzt wird.

6. Verfahren nach einem der Ansprüche 1 bis 5,
**dadurch gekennzeichnet, dass** der Innenkanal (K) des Verbinderteils (107) mit seiner Achse (Y-Y) in einem Winkel von 90° zur Längsachse (X-X) des Hauptleitungsstranges (HS) angeordnet wird.

7. Verfahren nach einem der Ansprüche 1 bis 6,
**dadurch gekennzeichnet, dass** mittels des Corrugators die sequentiell radial hervorstehenden, bevorzugt rotationssymmetrisch ausgebildeten, Rohrwandungsstrukturen (9, 109) erzeugt werden.

8. Verfahren nach einem der Ansprüche 1 bis 7,
**dadurch gekennzeichnet, dass** die radial hervorstehenden Rohrwandungsstrukturen (9, 109), insbesondere mittels des Corrugators, in Glattwandabschnitten (4) erzeugt werden, wobei bevorzugt zwischen Bereichen mit den radialen Rohrwandungsstrukturen (9, 109) Wellrohrabschnitte (2) angeordnet werden.

9. Verfahren nach einem der Ansprüche 1 bis 8,
**dadurch gekennzeichnet, dass** die radial hervorstehenden Rohrwandungsstrukturen (9, 109), insbesondere mittels des Corrugators, mit einer Stufung (9a, 9b, 109a, 109b) ausgebildet werden.

10. Verfahren nach einem der Ansprüche 1 bis 9,
**dadurch gekennzeichnet, dass**, insbesondere mittels des Corrugators, im Bereich der radial hervorstehenden Rohrwandungsstrukturen (9, 109) Sollbruchstellen ausgeprägt werden, oder dass das Einbringen der Öffnungen (6) in die Wandung (5) des einstückig ausgeführten Längenbereiches (LB) des Hauptleitungsstranges (HS) im Corrugator erfolgt.

11. Verfahren nach einem der Ansprüche 1 bis 10,
**dadurch gekennzeichnet, dass** das Einbringen der Öffnungen (6) in die Wandung (5) des einstückig ausgeführten Längenbereiches (LB) des Hauptleitungsstranges (HS) - seitlich an dessen Rohrachse (X-X) vorbei oder mittig durch die Rohrachse (X-X) - erfolgt durch
- ein Auskreisen durch mechanisches Schneiden,
- ein Ausstanzen,
- ein Wasserstrahlschneiden,
- ein Ultraschallschneiden mittels einer Sonotrode,
- ein Lasern, wobei insbesondere eine Messung der Strahlungsintensität hinter der Rohrwandung (5) im Rohrinneren zur Prozesssteuerung und/oder -überwachung herangezogen wird,
- ein gegebenenfalls mit einem heißen Dorn erfolgendes Punchen oder
- ein Einstechen eines heißen Dornes (10) mit anschließendem, insbesondere durch Unterdruck (P) bewirktem Hochziehen (H) der aus dem Material der Rohrwandung (5) entstehenden Schmelze (S), gegebenenfalls mit Ausbildung einer definierten Rohrwandungsstruktur (9, 109) für die Anbindung des Verbinderteils (107).

12. Verfahren nach einem der Ansprüche 1 bis 11,
**dadurch gekennzeichnet, dass** die Montage des Verbinderteils (107) durch ein Laserverschweißen mit den radial hervorstehenden Rohrwandungsstrukturen (9, 109) im einstückig ausgeführten Längenbereich (LB) erfolgt.

13. Verfahren nach einem der Ansprüche 1 bis 12,
**dadurch gekennzeichnet, dass** für die Montage des Verbinderteils (107) ein als Positionierhilfe, Stabilisierung und/oder Kontrollinstrument dienender, gegebenenfalls einen Schnapphaken und oder einen Dichtungswulst aufweisender, Glattdorn eingesetzt wird, der in die Öffnung (6) in der Wandung (5) eintaucht.

14. Verfahren nach einem der Ansprüche 1 bis 13,
**dadurch gekennzeichnet, dass** vor der Montage des Verbinderteils (107), insbesondere an einem aus Polypropylen-Material bestehenden, einstückig ausgeführten Längenbereich (LB) und/oder an einem aus Polypropylen-Material bestehenden Verbinderteil (107), eine Aktivierung des Materials durch Beflammung, Plasmabehandlung und/oder Coronabehandlung erfolgt.

15. Verfahren nach einem der Ansprüche 1 bis 14,
**dadurch gekennzeichnet, dass** die Stufung (109a, 109b) der spezifischen Schweißkontur (109) einen radial senkrecht zum Hauptleitungsstrang zylindrisch hervorstehenden Stutzen formt, welcher den Innenkanal (K) des Seitenrohres mit dem freien Durchflussquerschnitt (Q) des Hauptleitungsstrangs (HS) fluidisch verbindet, wobei der Stutzen vor dem stoffschlüssigen Verbinden des als Endstück des Seitenrohres (121) ausgebildeten Verbinderteils (107) mit der spezifischen Schweißkontur (109) in den Innenkanal (K), insbesondere in einer Spielpassung, eingeführt wird.

16. Verfahren nach einem der Ansprüche 1 bis 15,
**dadurch gekennzeichnet, dass** die spezifische Schweißkontur (109) einen als die Stufung (109a, 109b), insbesondere die zylindrische hervorstehende Geometrie, umlaufende Rippe (109c) ausgebildeten Schweißsockel (109c) aufweist.

17. Verfahren nach einem der Ansprüche 1 bis 16,
**dadurch gekennzeichnet,** an dem, dem Endstück des Seitenrohres (121) gegenüberliegenden Ende eine Steckgeometrie angeformt ist.

18. Verteilerrohr (1), hergestellt nach einem Verfahren gemäß einem der Ansprüche 1 bis 17.

## Claims

1. Process of manufacturing a distributor pipe (1) for fluids, which comprises a main line section (HS) in which corrugated pipe sections (2) having a corrugated wall (3) and flat pipe sections (4) having a flat wall (5) are arranged, the respective wall (3, 5) enclosing a free flow cross section (Q) for the fluid, and wherein distributor interfaces (VS) for connecting secondary line sections (NS) are located in the main line section (HS), wherein a one-piece length area (LB) of the main line section (S) and/or a connector element (107) is made of a thermoplastic material, and in that, in order to produce two or more distributor interfaces (VS), openings (6) are made in the wall (5) at two or more selected locations in the one-piece length area (LB) of the main line section (HS), after which a connector element (107) is fitted at the selected locations in each case, or after a connector element (107) has been fitted at the selected locations in each case, the connector element having an inner channel (K) which communicates with the free flow cross section (Q) of the main line section (HS), and the one-piece length area (LB) of the main line section (HS) in which the openings (6) are made in the wall (5) being produced using a corrugator, at least one corrugated pipe section (2) and one flat pipe section (4) being produced in this way,
**characterized in that** at selected locations in the one-piece length area (LB), radially projecting pipe wall structures (9, 109), namely specific welding contours (109) for positive substance jointing with a connector element (107) formed as an end piece of a lateral pipe (121), are sequentially produced, which remain closed or at which the openings (6) are made in the wall (5) as required, wherein the specific welding contours (109) are let into the main line section in order to ensure a sufficient wall thickness for the connection with the connector element (107) formed as an end piece of the lateral pipe (121) in the welding process, and the connector part (107) is assembled by bonding or welding it to the radially protruding pipe wall structures (9, 109) in the one-piece length section (LB).

2. Process according to claim 1,
**characterized in that** the one-piece length area (LB) of the main line section (S) and/or the connector element (107) is made of a polypropylene and/or a polyamide material.

3. Process according to claim 1 or 2,
**characterized in that** the one-piece length area (LB) of the main line section (HS) is made of a polypropylene material with carbon black as filler.

4. Process according to any one of claims 1 to 3,
**characterized in that** the one-piece length section (LB) of the main line section (HS) is made at least double-walled and/or coated with a wall coating, in particular by coextrusion.

5. Process according to any one of claims 1 to 4,
**characterized in that** the one-piece length section (LB) of the main line section (S) is designed as a multilayer pipe, a polypropylene material being used in the pipe inner layer and a polyamide material being used in the outer layer.

6. Process according to any one of claims 1 to 5,
**characterized in that** the inner channel (K) of the connector element (107) is arranged with its axis (Y-Y) at an angle of 90° to the longitudinal axis (X-X) of the main line section (HS).

7. Process according to any one of claims 1 to 6,
**characterized in that** by means of the corrugator, the sequentially radially protruding, preferably rotationally symmetrically formed, pipe wall structures (9, 109) are produced.

8. Process according to any one of the claims 1 to 7,
**characterized in that** the radially projecting pipe wall structures (9, 109) are produced, in particular by means of the corrugator, in flat wall sections (4), corrugated pipe sections (2) preferably being arranged between areas with the radial pipe wall structures (9, 109).

9. Process according to any one of claims 1 to 8,
**characterized in that** the radially protruding pipe wall structures (9, 109) are formed with a step (9a, 9b, 109a, 109b), in particular by means of the corrugator.

10. Process according to any one of claims 1 to 9,
**characterized in that,** in particular by means of the corrugator, predetermined breaking points are formed in the area of the radially projecting pipe wall structures (9, 109), or **in that** the insertion of the openings (6) into the wall (5) of the one-piece length area (LB) of the main line section (HS) is carried out in the corrugator.

11. Process according to any one of claims 1 to 10,
**characterized in that** the insertion of the openings (6) in the wall (5) of the one-piece length section (LB) of the main line section (HS) - laterally past its tube axis (X-X) or centrally through the tube axis (X-X) - is effected by
- a circling by mechanical cutting,
- a punching out,
- a water jet cutting,
- an ultrasonic cutting by means of a sonotrode,
- a laser cutting, whereby in particular a measurement of the radiation intensity behind the tube wall (5) in the tube interior is used for Process control and/or monitoring,
- a punching, which may be carried out with a hot mandrel, or
- a puncturing of a hot mandrel (10) with subsequent pulling up (H), in particular by vacuum (P), of the melt (S) resulting from the material of the pipe wall (5), optionally with formation of a defined pipe wall structure (9, 109) for the connection of the connector element (107).

12. Process according to any one of claims 1 to 11,
**characterized in that** the connector element (107) is assembled by laser welding to the radially projecting pipe wall structures (9, 109) in the one-piece length area (LB).

13. Process according to one of claims 1 to 12,
**characterized in that** for the assembly of the connector element (107), a flat mandrel serving as a positioning aid, stabilization and/or control instrument, optionally comprising a snap hook and or a sealing bead, is used, which immerses into the opening (6) in the wall (5).

14. Process according to one of the claims 1 to 13,
**characterized in that** prior to the assembly of the connector element (107), in particular on a one-piece length area (LB) consisting of polypropylene material and/or on a connector element (107) consisting of polypropylene material, an activation of the material is carried out by flame treatment, plasma treatment and/or corona treatment.

15. Process according to any one of claims 1 to 14,
**characterized in that** the step (109a, 109b) of the specific welding contour (109) forms a socket projecting cylindrically radially perpendicular to the main line section, which fluidically connects the inner channel (K) of the lateral pipe with the free flow cross section (Q) of the main line section (HS), wherein the socket is introduced into the inner channel (K), in particular in a clearance fit, before the positive substance jointing of the connector element (107) formed as an end piece of the lateral pipe (121) with the specific weld contour (109).

16. Process according to any one of claims 1 to 15,
**characterized in that** the specific welding contour (109) has a welding socket (109c) formed as the step (109a, 109b), in particular the cylindrical protruding geometry, running around it.

17. Process according to any one of claims 1 to 16,
**characterized in that** a plug geometry is formed on the end opposite the end piece of the lateral pipe (121).

18. Distributor pipe (1) manufactured by a process according to any one of claims 1 to 17.

## Revendications

1. Procédé de fabrication d'un tube de distribution (1) pour fluides, qui comprend une ligne de conduite principale (HS) dans laquelle des sections tubulaires ondulées (2), qui présentent une paroi ondulée (3), et des sections tubulaires lisses (4), qui présentent une paroi lisse (5), sont agencées, la paroi respective (3, 5) entourant une section transversale de passage libre (Q) pour le fluide, et des interfaces de distribution (VS) se trouvant dans la ligne de conduite principale (HS) pour le raccordement de lignes de conduite secondaires (NS), une zone de longueur (LB) réalisée d'un seul tenant de la ligne de conduite principale (S) et/ou une partie de liaison (107) étant fabriquées en une matière thermoplastique, et
pour réaliser deux ou plus de deux interfaces de distribution (VS), des ouvertures (6) étant aménagées dans la paroi (5) en deux ou plus de deux emplacements sélectionnés dans la zone de longueur (LB) réalisée d'un seul tenant de la ligne de conduite principale (HS), après quoi un montage d'une partie de liaison (107) est effectué à chacun des emplacements sélectionnés, ou après qu'un montage d'une partie de liaison (107) a été effectué à chacun des emplacements sélectionnés, la partie de liaison présentant un canal intérieur (K) qui est en liaison avec la section transversale d'écoulement libre (Q) de la ligne de conduite principale (HS) et la zone de longueur (LB) réalisée d'un seul tenant de la ligne de conduite principale (HS), dans laquelle les ouvertures (6) sont aménagées dans la paroi (5), étant fabriquée en utilisant une onduleuse, au moins une section tubulaire ondulée (2) et une section tubulaire lisse (4) pouvant être produites de cette manière,
**caractérisé en ce que** des structures de paroi tubulaire (9, 109) faisant saillie radialement de manière séquentielle, à savoir des contours de soudage spécifiques (109) pour la liaison par matière à une partie de liaison (107) configurée sous forme de pièce d'extrémité d'un tube latéral (121), sont produites à des emplacements sélectionnés dans la zone de longueur (LB) réalisée d'un seul tenant, qui restent fermées ou au niveau desquelles les ouvertures (6) sont aménagées dans la paroi (5) si nécessaire, les contours de soudage spécifiques (109) sont encastrés dans la ligne de conduite principale afin d'assurer une épaisseur de paroi suffisante pour la liaison avec la pièce de liaison (107) configurée sous forme de pièce d'extrémité du tube latéral (121) dans le procédé de soudage, et le montage de la pièce de liaison (107) s'effectue par collage ou soudage avec les structures de paroi tubulaire (9, 109) saillant radialement dans la zone de longueur (LB) réalisée d'un seul tenant.

2. Procédé selon la revendication 1, **caractérisé en ce que** la zone de longueur (LB) réalisée d'un seul tenant de la ligne de conduite principale (S) et/ou la partie de liaison (107) sont fabriquées en un matériau de polypropylène et/ou de polyamide.

3. Procédé selon la revendication 1 ou 2, **caractérisé en ce que** la zone de longueur (LB) réalisée d'un seul tenant de la ligne de conduite principale (HS) est fabriquée en un matériau de polypropylène avec du noir de carbone en tant que charge.

4. Procédé selon l'une quelconque des revendications 1 à 3, **caractérisé en ce que** la zone de longueur (LB) réalisée d'un seul tenant de la ligne de conduite principale (HS) est configurée, notamment par coextrusion, au moins à double paroi et/ou recouverte d'un revêtement de paroi.

5. Procédé selon l'une quelconque des revendications 1 à 4, **caractérisé en ce que** la zone de longueur (LB) réalisée d'un tenant de la ligne de conduite principale (S) est réalisée sous forme de tube à plusieurs couches, un matériau de polypropylène étant utilisé dans la couche intérieure de tube et un matériau de polyamide dans la couche extérieure.

6. Procédé selon l'une quelconque des revendications 1 à 5, **caractérisé en ce que** le canal intérieur (K) de la partie de liaison (107) est agencé avec son axe (Y-Y) à un angle de 90° par rapport à l'axe longitudinal (X-X) de la ligne de conduite principale (HS).

7. Procédé selon l'une quelconque des revendications 1 à 6, **caractérisé en ce que** les structures de paroi tubulaire (9, 109) faisant saillie radialement de manière séquentielle, de préférence configurées à symétrie de révolution, sont produites au moyen de l'onduleuse.

8. Procédé selon l'une quelconque des revendications 1 à 7, **caractérisé en ce que** les structures de paroi tubulaire (9, 109) faisant saillie radialement sont produites, notamment au moyen de l'onduleuse, dans des sections à paroi lisse (4), des sections tubulaires ondulées (2) étant de préférence agencées entre des zones avec les structures de paroi tubulaire radiales (9, 109).

9. Procédé selon l'une quelconque des revendications 1 à 8, **caractérisé en ce que** les structures de paroi tubulaire faisant saillie radialement (9, 109) sont configurées avec un étagement (9a, 9b, 109a, 109b), notamment au moyen de l'onduleuse.

10. Procédé selon l'une quelconque des revendications 1 à 9, **caractérisé en ce que**, notamment au moyen de l'onduleuse, des points de rupture sont marqués dans la zone des structures de paroi tubulaire faisant saillie radialement (9, 109), ou **en ce que** l'aménagement des ouvertures (6) dans la paroi (5) de la zone de longueur (LB) réalisée d'un seul tenant de la ligne de conduite principale (HS) est effectué dans l'onduleuse.

11. Procédé selon l'une quelconque des revendications 1 à 10, **caractérisé en ce que** l'aménagement des ouvertures (6) dans la paroi (5) de la zone de longueur (LB) réalisée d'un seul tenant de la ligne de conduite principale (HS) s'effectue - latéralement le long de son axe de tube (X-X) ou au centre à travers l'axe de tube (X-X) - par
- un arrondissage par découpage mécanique,
- un estampage,
- un découpage au jet d'eau,
- un découpage par ultrasons au moyen d'une sonotrode,
- un découpage au laser, une mesure de l'intensité du rayonnement derrière la paroi tubulaire (5) à l'intérieur du tube étant notamment utilisée pour la commande et/ou la surveillance du processus,
- un poinçonnage, éventuellement effectué avec un mandrin chaud, ou
- un enfoncement d'un dôme chaud (10) suivi d'une remontée (H), notamment par dépression (P), de la masse fondue (S) obtenue à partir du matériau de la paroi tubulaire (5), éventuellement avec formation d'une structure de paroi tubulaire définie (9, 109) pour la liaison de la partie de liaison (107).

12. Procédé selon l'une quelconque des revendications 1 à 11, **caractérisé en ce que** le montage de la partie de liaison (107) s'effectue par un soudage au laser avec les structures de paroi tubulaire (9, 109) faisant saillie radialement dans la zone de longueur (LB) réalisée d'un seul tenant.

13. Procédé selon l'une quelconque des revendications 1 à 12, **caractérisé en ce que**, pour le montage de la partie de liaison (107), un mandrin lisse servant d'aide au positionnement, de stabilisation et/ou d'instrument de contrôle, présentant éventuellement un crochet d'encliquetage et ou un bourrelet d'étanchéité, est utilisé, qui plonge dans l'ouverture (6) dans la paroi (5).

14. Procédé selon l'une quelconque des revendications 1 à 13, **caractérisé en ce qu'**avant le montage de la partie de liaison (107), notamment sur une zone de longueur (LB) réalisée d'un seul tenant, constituée de matériau de polypropylène et/ou sur une partie de liaison (107) constituée de matériau de polypropylène, une activation du matériau est effectuée par flambage, traitement au plasma et/ou traitement corona.

15. Procédé selon l'une quelconque des revendications 1 à 14, **caractérisé en ce que** l'étagement (109a, 109b) du contour de soudage spécifique (109) forme une tubulure en saillie cylindrique radialement perpendiculaire à la ligne de conduite principale, qui relie fluidiquement le canal intérieur (K) du tube latéral à la section transversale de passage libre (Q) de la ligne de conduite principale (HS), la tubulure étant insérée dans le canal intérieur (K), notamment dans un ajustement avec jeu, avant la liaison par matière de la partie de liaison (107) configurée sous forme de pièce d'extrémité du tube latéral (121) au contour de soudage spécifique (109).

16. Procédé selon l'une quelconque des revendications 1 à 15, **caractérisé en ce que** le contour de soudage spécifique (109) présente un socle de soudage (109c) configuré sous forme de nervure (109c) entourant l'étagement (109a, 109b), notamment la géométrie en saillie cylindrique.

17. Procédé selon l'une quelconque des revendications 1 à 16, **caractérisé en ce qu'**une géométrie d'emboîtement est formée à l'extrémité opposée à la pièce d'extrémité du tube latéral (121).

18. Tube de distribution (1) fabriqué par un procédé selon l'une quelconque des revendications 1 à 17.
